# EUROPÄISCHE PATENTSCHRIFT

(11) **EP 3 905 470 B1**
(45) Veröffentlichungstag und Bekanntmachung des Hinweises auf die Patenterteilung: **28.09.2022**
(21) Anmeldenummer: 20172508.2
(22) Anmeldetag: 30.04.2020
(51) Int. Cl.: H02J 3/01, H02M 1/12

(54) **FILTERVORRICHTUNG**
FILTER DEVICE
DISPOSITIF FILTRANT

(43) Veröffentlichungstag der Anmeldung: 03.11.2021
(73) Patentinhaber: Fronius International GmbH, 4643 Pettenbach (AT)
(72) Erfinder: SUCHY, Rene, 4643 Pettenbach (AT); SCHNETZER, Alexander, 4643 Pettenbach (AT); STARZINGER, Johannes, 4643 Pettenbach (AT)
(74) Vertreter: Isarpatent

(56) Entgegenhaltungen:
- EP-A1- 3 255 642
- WO-A1-2006/133671
- DE-A1-102013 100 246
- Volker Keddig ET AL: "Entstörung von PV-Anlagen mit dreiphasiger Einspeisung", ep ElektroPraktiker, 1. August 2009 (2009-08-01), Seiten 50-52, XP055730717, Internet Gefunden im Internet: URL:https://www.elektropraktiker.de/pv-200 9-07-50-52.pdf?eID=tx_nawsecuredl&falId=14 432&hash=f1ea54319a2dc77f78b279733eff09b0 [gefunden am 2020-09-15]

## Beschreibung

Die Erfindung betrifft eine Filtervorrichtung, insbesondere eine Netzfiltervorrichtung zur Reduzierung elektromagnetischer Störungen mit einem modularen Montageaufbau.

Netzfilter sind elektrische Schaltungen, die sowohl elektrische Störungen von elektrischen Geräten in einem Stromversorgungsnetz begrenzen als auch die elektromagnetische Verträglichkeit elektrischer Geräte gegenüber Störungen aus dem Stromversorgungsnetz erhöhen.

Herkömmliche Netzfilter weisen meist eine fliegende Kontaktierung der Bauelemente bzw. Komponenten innerhalb des Filters auf. Zudem sind herkömmliche Filter mit einer höheren Leistung ab 50kW zur elektrischen Isolation meist vollständig vergossen. Dies erhöht einerseits das Gewicht und die Größe des Filters und minimiert andererseits die Leistungsklasse des Filters. Ein weiterer erheblicher Nachteil herkömmlicher Filter ist, dass das Aufbausystem bzw. die Montage derartiger Filter sehr zeitaufwendig ist. Weiterhin erlauben herkömmliche Netzfilter aufgrund der fliegenden Kontaktierung, bei dem die Bauteile verlötet werden oder das Filter vollständig vergossen wird, keinen Austausch von defekten Bauteilen. Eine Reparatur von derartigen herkömmlichen Filtervorrichtungen ist daher weitestgehend nicht möglich.

Es ist daher eine Aufgabe der vorliegenden Erfindung, eine Filtervorrichtung zu schaffen, welche die oben genannten Nachteile vermeidet und insbesondere in einfacher und effizienter Weise innerhalb geringer Zeit montiert werden kann.

Diese Aufgabe wird erfindungsgemäß durch eine Filtervorrichtung zur Reduzierung elektromagnetischer Störungen mit modularem Aufbau mit den in Patentanspruch 1 angegebenen Merkmalen gelöst.

Die Erfindung schafft demnach eine Filtervorrichtung zur Reduzierung elektromagnetischer Störungen mit modularem Montageaufbau,
wobei die Filtervorrichtung ein Filterblech zur Aufnahme von ersten Ringkernhaltern aufweist, die in Führungsschienen des Filterblechs eingeschoben sind und eine erste Anzahl von Ferritringen enthalten, wobei um die ersten Ringkernhalter herum isolierte Wechselstromkabel für Wechselstromphasen und ein Neutralleiter oder isolierte Gleichstromkabel für Gleichströme zur Bildung einer stromkompensierten Drossel der Filtervorrichtung mehrfach gewickelt sind, wobei die Wechselstromkabel und der Neutralleiter oder die Gleichstromkabel einerseits mit Anschlusskontakten der Filtervorrichtung verbunden sind und andererseits durch zweite Ringkernhalter, die auf das Filterblech der Filtervorrichtung montiert sind und eine zweite Anzahl von Ferritringen enthalten, hindurchgeführt sind.

Ein Vorteil des modularen Aufbaus der erfindungsgemäßen Filtervorrichtung besteht darin, dass keine Bauelemente in eine Vergussmasse eingegossen werden müssen, um eine elektrische Isolation zu schaffen.

Dies führt auch zu einer Gewichtsreduzierung und zu einer Verringerung der Größe der Filtervorrichtung gegenüber herkömmlichen Filtervorrichtungen.

Ein weiterer Vorteil der erfindungsgemäßen Filtervorrichtung besteht darin, dass die Bauteile weitestgehend lösbare Verbindungen aufweisen, sodass einzelne Baukomponenten bei Auftreten eines Fehlers austauschbar sind. Weiterhin erlaubt der modulare Aufbau der Filtervorrichtung eine schnelle und effiziente Montage der Filtervorrichtung. Insbesondere ist es nicht notwendig, Bauteile miteinander zu verlöten.

Bei einer möglichen Ausführungsform der erfindungsgemäßen Filtervorrichtung sind die Anschlusskontakte der Filtervorrichtung an einer Stirnseite des Filterblechs vorgesehen und weisen jeweils ein Gewinde auf, das durch eine entsprechende Öffnung einer ersten Platine hindurchragt, an dem ein Kabelschuh eines um die ersten Ringkernhalter herumgewickelten Wechsel- oder Gleichstromkabels befestigt ist.

Bei einer weiteren möglichen Ausführungsform der erfindungsgemäßen Filtervorrichtung ist die erste Platine mit elektronischen Komponenten bestückt.

Bei diesen elektrischen Komponenten kann es sich insbesondere um Kondensatoren oder Widerstände handeln.

Bei einer weiteren möglichen Ausführungsform der erfindungsgemäßen Filtervorrichtung sind die Kondensatoren und/oder Widerstände auf einer Bestückungsseite der ersten Platine angebracht, die dem Filterblech der Filtervorrichtung gegenüberliegt.

Bei einer möglichen Ausführungsform der erfindungsgemäßen Filtervorrichtung verlaufen die Wechsel- oder Gleichstromkabel entlang einer Rückseite der ersten Platine zu den durch die Öffnungen der ersten Platine hindurchragenden Gewinden der Anschlusskontakte der Filtervorrichtung.

Bei einer weiteren möglichen Ausführungsform der erfindungsgemäßen Filtervorrichtung ist auf der Rückseite der ersten Platine eine Kunststoffabdeckung zur elektrischen Isolierung sowie zur Führung und Befestigung der Wechsel- oder Gleichstromkabel vorgesehen.

Bei einer weiteren möglichen Ausführungsform der erfindungsgemäßen Filtervorrichtung ist unterhalb der zweiten Ringkernhalter eine zweite Platine vorgesehen, welche mit elektronischen Komponenten bestückt ist.

Bei diesen elektronischen Komponenten kann es sich insbesondere auch um Kondensatoren handeln.

Bei einer möglichen Ausführungsform der erfindungsgemäßen Filtervorrichtung ist die zweite Platine in das Filterblech der Filtervorrichtung eingelegt und dort befestigt.

Bei einer weiteren möglichen Ausführungsform der erfindungsgemäßen Filtervorrichtung sind die isolierten Wechselstromkabel von Ringpulverkernen umschlossen.

Bei einer möglichen Ausführungsform der erfindungsgemäßen Filtervorrichtung befinden sich die Ringpulverkerne zwischen den ersten Ringkernhaltern und den zweiten Ringkernhaltern.

Bei einer weiteren möglichen Ausführungsform der erfindungsgemäßen Filtervorrichtung weisen die auf den beiden Platinen der Filtervorrichtung vorgesehenen Kondensatoren X-Kondensatoren zur Dämpfung von Gegentakt-Störspannungen und/oder Y-Kondensatoren zur Unterdrückung von Störspannungen auf.

Bei einer weiteren möglichen Ausführungsform der erfindungsgemäßen Filtervorrichtung wird das durch die Öffnung der ersten Platine hindurchragende Gewinde teilweise von einer Distanzhülse umschlossen.

Bei einer weiteren möglichen Ausführungsform der erfindungsgemäßen Filtervorrichtung wird auf das durch die Öffnung der ersten Platine hindurchragende Gewinde der Kabelschuh eines Wechselstromkabels oder eines Gleichstromkabels aufgesetzt und mittels einer Mutter lösbar befestigt.

Bei einer weiteren möglichen Ausführungsform der erfindungsgemäßen Filtervorrichtung weist die Filtervorrichtung ein PV-Generator-seitiges DC-Filter zur Filterung der Gleichstromversorgung eines Gerätes durch einen Photovoltaikgenerator auf.

Bei einer weiteren möglichen Ausführungsform der erfindungsgemäßen Filtervorrichtung weist die Filtervorrichtung ein netzseitiges AC-Filter zur Filterung der Wechselstromversorgung eines Gerätes durch ein Wechselstromnetz auf.

Bei einer weiteren möglichen Ausführungsform der erfindungsgemäßen Filtervorrichtung ist die Filtervorrichtung ein netzseitiges AC-Filter zur Filterung der Wechselstromversorgung eines Wechselrichters.

Bei einer weiteren möglichen Ausführungsform der erfindungsgemäßen Filtervorrichtung ist die erste Anzahl von Ferritringen und/oder die zweite Anzahl von Ferritringen konfigurierbar.

Bei einer weiteren möglichen Ausführungsform der erfindungsgemäßen Filtervorrichtung ist die Anzahl von Wicklungen der Wechselstromkabel oder der Gleichstromkabel um die ersten Ringkernhalter herum konfigurierbar.

Bei einer weiteren möglichen Ausführungsform der erfindungsgemäßen Filtervorrichtung sind die Ringkernhalter und/oder die Platinen austauschbar an dem Filterblech der Filtervorrichtung montiert.

Im Weiteren werden mögliche Ausführungsformen der erfindungsgemäßen Filtervorrichtung unter Bezugnahme auf die beigefügten Figuren näher erläutert.

Es zeigen:
- Fig. 1: eine perspektivische Seitenansicht auf eine erste mögliche Ausführungsform der erfindungsgemäßen Filtervorrichtung;
- Fig. 2: eine weitere perspektivische Seitenansicht auf das in Fig. 1 dargestellte Filter ohne das Filterblech;
- Figur 3: ein Schaltkreisdiagram für ein mögliches Ausführungsbeispiel der in den Figuren 1, 2 dargestellten Filtervorrichtung;
- Fig. 4: eine perspektivische Seitenansicht auf eine zweite Ausführungsform der erfindungsgemäßen Filtervorrichtung;
- Fig. 5: eine weitere perspektivische Seitenansicht auf der in Fig. 4 dargestellten Filtervorrichtung ohne Filterblech;
- Figur 6: ein Schaltkreisdiagram möglicher Ausführungsbeispiele der in den Figuren 4,5 dargestellten Filtervorrichtung.

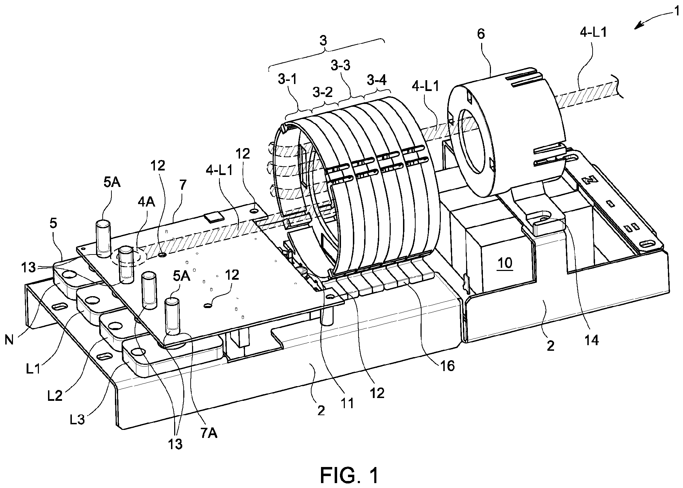

Fig. 1 stellt eine erste Ausführungsform der erfindungsgemäßen Filtervorrichtung 1 zur Reduzierung elektromagnetischer Störungen mit modularem Montageaufbau dar. Bei der in Fig. 1 dargestellten Ausführungsform ist die Filtervorrichtung 1 als AC-Filter für Wechselspannungen ausgelegt. Die Filtervorrichtung 1, wie sie in Fig. 1 dargestellt ist, weist ein Filterblech 2 zur Aufnahme von ersten Ringkernhaltern 3 auf. Diese Ringkernhalter 3 können in Führungsschienen des Filterblechs 2 eingeschoben werden und eine erste Anzahl von Ferritringen enthalten. Um die ersten Ringkernhalter 3 herum sind isolierte Wechselstromkabel für verschiedene Wechselstromphasen L sowie ein Neutraleiter N zur Bildung einer stromkompensierten Drossel der Filtervorrichtung 1 mehrfach gewickelt. Die Wechselstromkabel 4-L und der Neutralleiter 4-N sind einerseits mit Anschlusskontakten 5 der Filtervorrichtung 1 verbunden und andererseits durch zweite Ringkernhalter 6 hindurchgeführt. Die zweiten Ringkernhalter 6 sind auf das Filterblech 2 der Filtervorrichtung 1 montiert und weisen eine zweite Anzahl von Ferritringen auf. Die in Fig. 1 dargestellte AC-Filtervorrichtung 1 umfasst insgesamt vier Leitungen, nämlich drei Wechselstromkabel 4-L1, 4-L2, 4-L3 für drei verschiedenen Stromphasen L1, L2, L3 sowie einen Neutralleiter 4-N. In Fig. 1 ist lediglich die Wicklung des Wechselstromkabels 4-L1 für die erste Stromphase L1 dargestellt. Bei dem in Fig. 1 dargestellten Ausführungsbeispiel der AC-Filtervorrichtung 1 kann dieses Wechselstromkabel 4-L und der Neutralleiterleiter 4-N jeweils mehrfach, beispielsweise dreimal, um die Ringkernhalter 3 herumgewickelt werden, bevor sie durch den zweiten Ringkernhalter 6 hindurchgeführt werden.

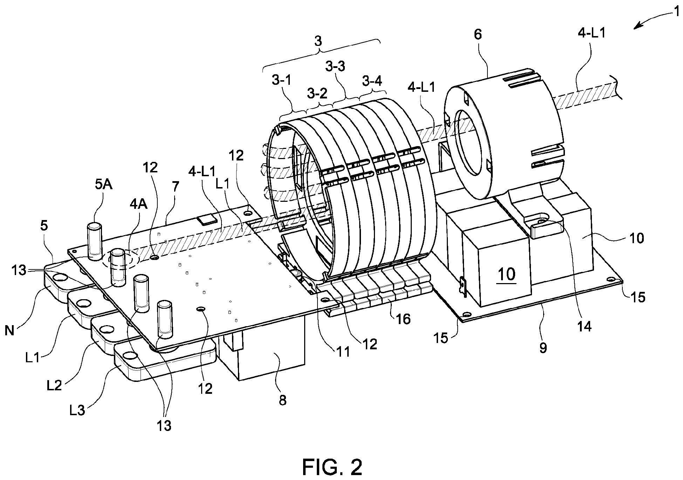

Wie in den Figuren 1, 2 erkennbar, sind die Anschlusskontakte 5 der Filtervorrichtung 1 an einer Stirnseite des Filterblechs 2 vorgesehen. Die Anschlusskontakte 5 weisen jeweils ein Gewinde 5A auf, das durch eine entsprechende Öffnung 7A einer ersten Platine 7 hindurchragt. An dem Gewinde 5A, welches durch die Öffnung 7A der ersten Platine 7 hindurchragt, ist ein Kabelschuh 4A eines um die ersten Ringkernhalter 3 herumgewickelten Wechselstromkabels oder eines Neutralleiterleiters befestigt. Bei dem in Fig. 1 dargestellten Ausführungsbeispiel weist die AC-Filtervorrichtung 1 vier Anschlusskontakte 5 mit vier entsprechenden Gewinden 5A auf, an denen vier Kabelschuhe 4A für einen Neutralleiterleiter 4-N und drei Wechselstromkabel 4-L angeschlossen werden können.

Die erste Platine 7 der in Fig. 1 dargestellten AC-Filtervorrichtung 1 ist mit elektronischen Komponenten 8 bestückt, wie in Fig. 2 erkennbar. Bei diesen Komponenten kann es sich insbesondere um Kondensatoren und/oder Widerständehandeln. Die Komponenten 8 sind dabei vorzugsweise auf einer Bestückungsseite der ersten Platine 7 angebracht, die dem Filterblech 2 der Filtervorrichtung 1 gegenüberliegt, d.h. in Fig. 2 auf der Unterseite der dort dargestellten Platine 7. Die Wechselstromkabel 4-L sowie der Neutralleiter 4-N verlaufen entlang einer in Fig. 2 oben dargestellten Rückseite der ersten Platine 7 hin zu den durch die Öffnung 7A der ersten Platine 7 hindurchragenden Gewinden 5A der Anschlusskontakte 5 der Filtervorrichtung 1. In der Darstellung gemäß Fig. 1, 2 weist die erste Platine 7 eine Vorderseite auf, die unten liegt und eine Rückseite, die oben liegt. Die Vorderseite der ersten Platine 7 bildet die Bestückungsseite für die elektronischen Komponenten 8, insbesondere die dort vorgesehenen Kondensatoren. Die oben liegende Rückseite der ersten Platine 7 ist diejenige Seite, auf welcher die Wechselstromkabel 4-L und der Neutralleiter 4-N verlaufen.

Bei einer bevorzugten Ausführungsform der erfindungsgemäßen Filtervorrichtung 1 ist auf der Rückseite der ersten Platine 7 eine Kunststoffabdeckung zur elektrischen Isolierung sowie zur Führung und Befestigung der Wechselstromkabel 4-L und des Neutralleiters 4-N vorgesehen. Hierdurch kann die Montage vereinfacht werden. Darüber hinaus bietet die elektrische Isolierung eine zusätzliche Absicherung gegenüber Kurzschlüssen.

Bei einer weiteren möglichen Ausführungsform ist unterhalb der zweiten Ringkernhalter eine zweite Platine 9 vorgesehen, wie in Fig. 2 dargestellt. Diese zweite Platine 9 ist ebenfalls mit elektronischen Komponenten 10 bestückt. Diese elektronischen Komponenten 10 können ebenfalls Kondensatoren aufweisen. Die zweite Platine 9 kann in das Filterblech 2 der Filtervorrichtung 1 eingelegt werden und dort befestigt werden.

Bei einer möglichen Ausführungsform sind die isolierten Wechselstromkabel 4-L von Ringpulverkernen 19 umschlossen. Diese Ringpulverkerne 19 können sich zwischen den ersten Ringkernhaltern 3 und den zweiten Ringkernhaltern 6 befinden. Die auf den beiden Platinen 7, 9 der Filtervorrichtung 1 vorgesehenen Kondensatoren 8, 10 weisen bei einer möglichen Ausführungsform X-Kondensatoren zur Dämpfung von Gegentakt-Störspannungen und/oder Y-Kondensatoren zur Unterdrückung von Störspannungen auf. Bei einer möglichen Ausführungsform wird das durch die Öffnung 7A der ersten Platine 7 hindurchragende Gewinde 5A zumindest teilweise von einer Distanzhülse umschlossen, auf die der Kabelschuh 4A eines Wechselstromkabels 4-L oder des Neutralleiters 4-N aufgesetzt und mittels einer Mutter lösbar befestigt ist. Hierdurch kann die Montage der Filtervorrichtung 1 weiter erleichtert werden.

Die in Fig. 2 dargestellte Ausführungsform der Filtervorrichtung 1 stellt eine AC-Filtervorrichtung 1 dar. Die AC-Filtervorrichtung 1 kann zur Wechselstromversorgung eines Gerätes durch ein Wechselstromnetz vorgesehen sein. Bei diesem Gerät kann es sich beispielsweise um einen Wechselrichter handeln. Die ersten Ringkernhalter 3 enthalten eine erste Anzahl von Ferritringen. Die zweiten Ringkernhalter 6 weisen eine zweite Anzahl von Ferritringen auf. Bei einer möglichen Ausführungsform ist die erste Anzahl von Ferritringen und/oder die zweite Anzahl von Ferritringen konfigurierbar. Hierdurch kann die erfindungsgemäße Filtervorrichtung 1 für verschiedene Anwendungsfälle in einfacher Weise angepasst werden. Eine Umkonfigurierung der Filtervorrichtung 1 für verschiedene Anwendungsfälle ist möglich.

Bei einer weiteren möglichen Ausführungsform der erfindungsgemäßen Filtervorrichtung 1 ist die Anzahl von Wicklungen der Wechselstromkabel 4-L und des Neutralleiters 4-N um die ersten Ringkernhalter 3 herum ebenfalls konfigurierbar. Dies bietet einen weiteren Freiheitsgrad zur Anpassung der Filtervorrichtung 1 an den jeweiligen Anwendungsfall.

Weiterhin sind die Ringkernhalter 3, 6 und die Platinen 7, 9 bei einer möglichen Ausführungsform an dem Filterblech 2 der Filtervorrichtung 1 austauschbar montiert. Ist beispielsweise eine Komponente einer der Filterplatinen 7, 9 beschädigt, kann die betreffende Platine ausgetauscht werden, um die Funktionsfähigkeit der Filtervorrichtung 1 wiederherzustellen. Bei einer möglichen Ausführungsform sind die elektronischen Komponenten 8, 10, mit welchen die beiden Platinen 7, 9 bestückt sind, lösbar mit den Platinen 7, 9 verbunden, insbesondere eingesteckt. Bei dieser Ausführungsform ist es möglich, einzelne fehlerhafte elektronische Komponenten 8, 10 aus der Platine 7, 9 herauszuziehen und durch eine funktionsfähige elektronische Komponente 8, 10 zu ersetzen. Dies erlaubt es, die erfindungsgemäße Filtervorrichtung 1 selbst bei Beschädigung einzelner elektronischer Komponenten schnell und effizient zu reparieren.

Die erfindungsgemäße Filtervorrichtung 1, wie sie in den Figuren 1, 2 dargestellt ist, erlaubt eine kompakte Bauweise zur Einhaltung von Luft- und Kriechstrecken. Ein Verguss von Bauelementen zur elektrischen Isolation ist nicht erforderlich. Die modulare Bauweise erlaubt eine schnelle und effiziente Montage der Filtervorrichtung 1 sowie eine effiziente und schnelle Austauschbarkeit von fehlerhaften Komponenten. Der modulare Montageaufbau führt darüber hinaus zu einem relativ geringen Gewicht der erfindungsgemäßen Filtervorrichtung 1 im Vergleich zu herkömmlichen Filtervorrichtungen. Ein weiterer Vorteil der erfindungsgemäßen Filtervorrichtung 1 besteht darin, dass die stromkompensierte Drossel direkt an den am das Montageblech bzw. Filterblech 2 montierten Ringkernhaltern 3 gewickelt werden kann, wobei keine zusätzlichen Fertigungshilfsmittel erforderlich sind. Dies führt zu einer weiteren Zeitersparnis bei der Montage der erfindungsgemäßen Filtervorrichtung 1.

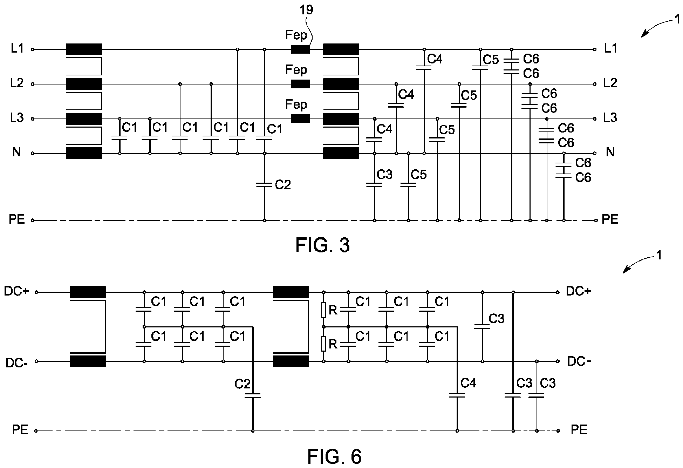

Figur 3 zeigt ein Schaltkreisdiagram eines möglichen Ausführungsbeispiels der erfindungsgemäßen AC-Filtervorrichtung 1, deren modularer Aufbau in den Figuren 1, 2 dargestellt ist. Bei dem in der Figur 3 dargestellten Ausführungsbeispiel sind die Kondensatoren C1 bis C6 auf den Platinen 7, 9 montiert. Bei den Kondensatoren C1, C4 handelt es sich um sogenannte X-Kondensatoren, die zur Dämpfung von Gegentakt-Störspannungen und Störspannungen zwischen den Zuleitungen vorgesehen sind. Demgegenüber sind die Kondensatoren C2, C3, C5 und C6 Y-Kondensatoren. Diese Y-Kondensatoren sind zur Unterdrückung von Störspannungen, die auf der gleichen Phase auf Außenleiter und Neutralleiter gegenüber Erde auftreten (Gleichtaktstörungen), vorgesehen.

In der Figur 3 sind zudem die Ringpulverkerne 19 (Fep) erkennbar. Die in Fig. 3 dargestellte AC-Filtervorrichtung 1 hat eine Leistung von 50 kW. Die AC-Filtervorrichtung 1 kann auch beispielsweise eine Leistung von 100 kW aufweisen. Die Anzahl der Kerne, Windungen und Induktivität kann variieren. Beispielsweise weist die Implementierung gemäß Fig. 3 drei Kerne mit fünf Windungen und einer Induktivität von L = 500 Mikrohenry auf. Bei einer AC-Filtervorrichtung 1 mit einer Leistung von 100 kW beträgt die Anzahl der Kerne vier und die Anzahl der Windungen ebenfalls vier und die Induktivität L = 450 Mikrohenry.

Die erfindungsgemäße Filtervorrichtung 1 besitzt eine stromkompensierte Drossel, bei der Wechselstromkabel 4-L um die in den ersten Ringkernhaltern 3 enthaltenen Ringkerne herumgewickelt sind. Diese stromkompensierte Drossel bzw. Gleichtaktdrossel CMC(englisch: common mode choke) besitzt mehrere Wicklungen, die gegensinnig zum Arbeitsstrom durchflossen werden können, sodass sich deren magnetische Felder im Kern der stromkompensierten Drossel aufheben. Die stromkompensierte Drossel wird zur Dämpfung von Störemissionen verwendet. Die stromkompensierte Drossel unterdrückt asymmetrische (common mode) oder Gleichtaktstörströme, die in gleicher Richtung auf den Zuleitungen fließen. Für den Betriebsstrom, der im Gegentakt, d.h. auf Leitungen entgegengesetzter Richtung, fließt, stellen die Drosseln dagegen nur eine geringe Induktivität dar. Die Magnetfelder eines Gegentaktstromes heben sich auf und können folglich auch kein Magnetfeld im Ferritkern erzeugen.

Die Kapazitäten der X- und Y-Kondensatoren können an den jeweiligen Anwendungsfall angepasst werden. Bei dem in der Figur 3 dargestellten Ausführungsbeispiel weist der X-Kondensator C1 eine Kapazität von 3,3 Mikrofarad und der X-Kondensator C4 eine Kapazität von 6,8 Mikrofarad auf. Der Y-Kondensator C2 weist beispielsweise eine Kapazität von 1 Mikrofarad auf, während der Y-Kondensator C3 eine Kapazität von 100 Nanofarad besitzt. Weiterhin kann der Y-Kondensator C5 eine Kapazität von 22 Nanofarad aufweisen, während der Y-Kondensator C6 lediglich eine Kapazität von 1 Nanofarad besitzt.

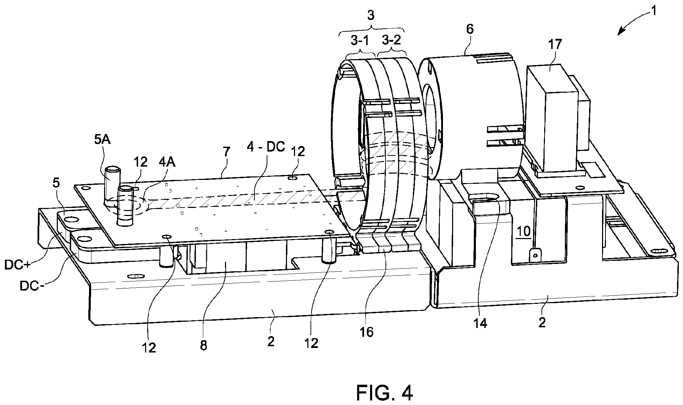

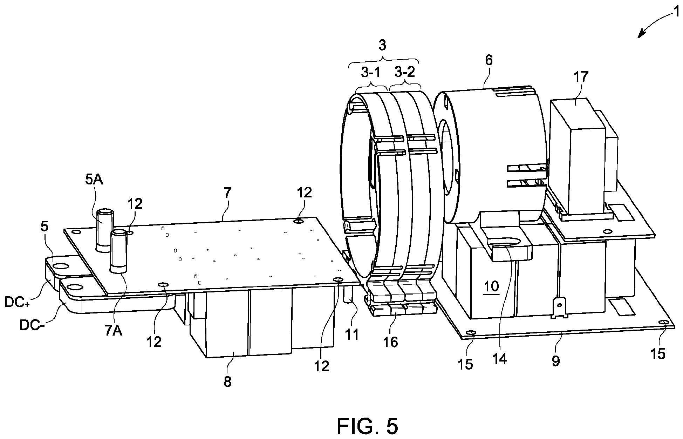

Die Figuren 4 und 5 zeigen eine weitere Ausführungsform der erfindungsgemäßen Filtervorrichtung 1. Die Figuren 4, 5 zeigen den modularen und Hardware-Aufbau bei dieser Ausführungsform der Filtervorrichtung 1. Die Figur 6 zeigt ein Schaltkreisdiagramm zur Darstellung eines möglichen Ausführungsbeispiels der in den Figuren 4, 5 dargestellten Filtervorrichtung 1. Die in den Figuren 4 bis 6 dargestellte Filtervorrichtung 1 ist eine DC-Filtervorrichtung. DC-Filtervorrichtungen können für eine Gleichstromversorgung eines Gerätes, beispielsweise durch eine Photovoltaikanlage oder ein Photovoltaikmodul vorgesehen sein. Der Aufbau der DC-Filtervorrichtung entspricht weitestgehend dem modularen Aufbau der AC-Filtervorrichtung, wobei allerdings lediglich zwei Gleichstromkabel für entgegengesetzte Gleichströme vorgesehen sind. Dementsprechend weist die Filtervorrichtung 1 nur zwei Anschlusskontakte 5 auf, nämlich einen positiven Gleichstromanschluss DC+ und einen negativen Gleichstromanschluss DC-. Die Gleichstromkabel für Gleichströme DC (4-DC) werden ebenfalls um den ersten Ringkernhalter 3 herumgewickelt und anschließend durch zweite Ringkernhalter 6 hindurchgeführt. Die Anzahl der in den Ringkernhaltern enthaltenen Ferritringe ist unterschiedlich zu der Anzahl der Ferritringen bei der AC-Filtervorrichtung 1, wie sie in den Figuren 1, 2 dargestellt ist. Während die AC-Filtervorrichtung 1 gemäß Fig. 1 in dem dargestellten Ausführungsbeispiel vier erste Ringkernhalter 3-1,3-2,3-3,3-4aufweist, besitzt die DC-Filtervorrichtung 1 gemäß Fig. 5 lediglich zwei Ringkernhalter 3-1,3-2 Die Figur 6 zeigt ein Schaltkreisdiagramm für ein Implementierungsbeispiel einer erfindungsgemäßen DC-Filtervorrichtung 1, deren modularer Aufbau in den Figuren 4, 5 dargestellt ist. Fig. 6 zeigt eine DC-Filtervorrichtung 1 mit einer Leistung von beispielsweise 50 kW oder 100 kW. Die Filtervorrichtung 1 besitzt Kondensatoren C1, C2, C3 und Entladewiderstände R. Diese Kondensatoren und Entladewiderstände können als elektronische Komponenten 8, 10 auf den Platinen 7, 9 vorgesehen sein. Bei einer möglichen Implementierung weist der X-Kondensator C1 eine Kapazität von 3,3 Mikrofarad auf. Die Y-Kondensatoren C2 besitzen beispielsweise eine Kapazität von 1 Mikrofarad. Die Y-Kondensatoren C3 weisen beispielsweise eine Kapazität von 2,2 Nanofarad auf, während die Y-Kondensatoren C4 eine höhere Kapazität von 100 Nanofarad besitzen. Die Entladewiderstände R weisen beispielsweise einen Widerstandswert von 4,7 Megaohm auf. Wie in den Figuren 4, 5 erkennbar, ist die Anzahl der Ringkernhalter 3 beispielsweise zwei. Die Anzahl der Windungen bzw. Wicklungen der Gleichstromkabel beträgt beispielsweise N = 5. Weiterhin kann die Induktivität L = 300 Mikrohenry sein.

Die in den Figuren 4, 5 dargestellte Ausführungsform der DC-Filtervorrichtung 1 weist eine Einheit 17 zur Strommessung auf. Durch die Stromesseinheit 17 werden eines oderbeide Kabel, d.h. eines oder beide Gleichstromkabel, geführt.

Je nach Anwendungsfall kann die Kapazität der Kondensatoren, mit welchen die Platinen 7, 9 bestückt sind, sowohl bei der AC-Filtervorrichtung 1, wie sie in den Figuren 1, 2 dargestellt ist, als auch in der DC-Filtervorrichtung 1, wie sie in den Figuren 4, 5 dargestellt ist, variieren. Bei einer bevorzugten Ausführungsform können die elektronischen Komponenten 8, 10 an den Platinen 7, 9 ausgetauscht werden, um die Filtervorrichtung 1 für verschiedene Anwendungsfälle zu optimieren. Vorzugsweisesind die elektronischen Komponenten 8, 10, d.h. die Kondensatoren und/oder die Entladewiderstände, in entsprechende Steckeinrichtungen eingesteckt, sodass sie einfacher Weise zu Reparaturzwecken oder Optimierungszwecken ausgetauscht werden können. Eine entsprechende Bestückung der Platinen 7, 9 kann in einer möglichen Variante vor der Endmontage der Filtervorrichtung 1 erfolgen. Hierdurch kann die Produktion der Filtervorrichtung 1 flexibel auf Schwankungen hinsichtlich der Nachfrage von unterschiedlichen Varianten der Filtervorrichtung 1 reagieren.

Die verschiedenen Komponenten, insbesondere die Ringkernhalter, können zur Fertigung sowohl von DC-Filtervorrichtungen als auch AC-Filtervorrichtungen verwendet werden. Auch die Bestückungskomponenten der Platinen 7, 9, insbesondere die Kondensatoren und Widerstände, können zur Fertigung sowohl von DC-Filtervorrichtungen als auch AC-Filtervorrichtungen verwendet werden. Der modulare Aufbau der Filtervorrichtungen 1 ermöglicht somit eine flexible Verwendung von gelagerten elektronischen Komponenten zur Herstellung unterschiedlicher Ausführungsvarianten der Filtervorrichtungen 1.

Die Montage einer erfindungsgemäßen Filtervorrichtung 1 kann schnell und effizient durchgeführt werden. Beispielsweise kann die Montage einer der in den Figuren 1, 2 dargestellten AC-Filtervorrichtung 1 wie folgt schrittweise erfolgen. In einem ersten Montageschritt werden auf ein Filterblech 2, welches über entsprechende Führungsschienen verfügt, erste Ringkernhalter 3 nacheinander eingeschoben. Beispielsweise werden nacheinander vier Ringkernhalter 3 in zwei parallel verlaufende Führungsschienen des Filterbleches 2 eingeschoben. Hierzu weisen die vier Ringkernhalter 3 der AC-Filtervorrichtung 1, wie in Fig. 2 dargestellt, an der Unterseite entsprechende Führungseinrichtungen 16 auf, die es erlauben, die Ringkernhalter 3 in Führungsschienen des Filterbleches 2 in einfacher Weise mechanisch einzuschieben. In jeden Ringkernhalter 3 kann ein entsprechender Ferritring eingelegt werden. Jeder Ringkernhalter 3 kann in gleicher Orientierung (Kunststoffseite voran) auf einer Seite in die vorgesehenen Führungsschienen des Filterblechs 2 eingeschoben werden. Anschließend kann eine Fixierung mithilfe einer Schraube 11 manuell erfolgen, wie sie in den Figuren 1, 2 dargestellt ist. In einem weiteren Schritt können die Anschlusskontakte 5 an das Filterblech 2 angebracht werden. Dabei kann beispielsweise jeder Anschlusskontakt 5 mithilfe von zwei Montageschrauben befestigt werden. Nach Anbringung der Anschlusskontakte 5 auf dem Filterblech 2 wird die erste Platine 7 aufgelegt. Die erste Platine 7 weist Öffnungen 7A auf, durch welche hindurch Gewinde 5A der Anschlusskontakte 5 hindurchgeführt werden. In einem weiteren Montageschritt kann eine Filterisolierung bzw. Kunststoffabdeckung zur elektrischen Isolierung angebracht werden. Hierzu wird die Kunststoffabdeckung auf der in den Figuren 1, 2 nach oben zeigenden Rückseite der Platine 7 aufgesetzt bzw. aufgelegt. Die aufgesetzte Kunststoffabdeckung ist in den Figuren 1, 2 nicht dargestellt. Die Kunststoffabdeckung kann Führungen aufweisen, welche die Montage und Verlegung von Stromkabeln erleichtern. Die aufgesetzte Kunststoffabdeckung kann ebenfalls mithilfe von Montageelementen, insbesondere Schrauben, an die Platine 7 befestigt werden. Beispielsweise kann die Platine 7 mithilfe von vier Schrauben 12 angeschraubt werden. In einem weiteren Montageschritt werden Distanzhülsen 13 über die Gewindeköpfe 5A der Anschlusskontakte 5 aufgesetzt, welche die durch die Öffnungen 7A der ersten Platine 7 hindurchragenden Gewinde 5A teilweise umschließen. Diese Distanzhülsen 13 sind in den Figuren 1, 2 dargestellt.

Bei einer möglichen Ausführungsvariante kann in einem nächsten Montageschritt ein sogenannter Phasentrenner in den zylindrischen Kern der Ringkernhalter 3 eingesetzt werden und in die richtige Orientierung verbracht werden. Nach Anbringen des Phasentrenners kann der Kabelschuh 4A des ersten Wechselstromkabels 4-L1 auf die Distanzhülse 13 eines Gewindes 5A eines entsprechenden Anschlusskontaktes 5 aufgesetzt werden. Jedes Wechselstromkabel 4-L weist einen Isolationsschlauch auf, welcher die elektrische Leitung umhüllt. Zur Montage darf der Isolationsschlauch nicht zu weit auf den Kabelschuh 4A des Kabels geschoben werden. Die verschiedenen Wechselstromkabel 4-L1, 4-L2, 4-L3 werden nacheinander montiert. Zunächst wird das erste Wechselstromkabel 4-L1 für die erste Stromphase L1 um die ersten Ringkernhalter 3 herum mehrfach gewickelt. Die Anzahl der Wicklungen bzw. Windungen kann je nach Anwendungsfall variieren. Bei dem in den Figuren 1, 2 dargestellten Ausführungsbeispiel wird das Wechselstromkabel 4-L1 dreimal um die vier Ringkernhalter 3 der stromkompensierten Drossel gewickelt. In einem weiteren Montageschritt wird anschließend das zweite Wechselstromkabel 4-L2 für die zweite Wechselstromphase L2 in gleicher Weise montiert, indem das Wechselstromkabel 4-L2 ebenfalls dreimal um die vier Ringkernhalter 3 der stromkompensierten Drossel herumgewickelt wird. Anschließend wird in einem weiteren Montageschritt das dritte Wechselstromkabel 4-L3 um die vier Ringkernhalter 3 der stromkompensierten Drossel herumgewickelt. In einem weiteren Montageschritt wird anschließend der Neutralleiter N montiert, indem er an dem entsprechenden Anschlusskontakt 5 angeschlossen wird und ebenfalls mehrfach um die vier Ringkernhalter 3 der stromkompensierten Drossel herumgewickelt wird. Die in dieser Weise montierten drei Wechselstromkabel 4-L1, 4-L2, 4-L3 und der Neutralleiter 4-N liegen dabei vorzugsweise auf der in den Figuren 1, 2 nicht dargestellten isolierenden Kunststoffabdeckung auf. Die Kunststoffabdeckung besitzt Führungen für die verschiedenen Kabel, in welche die Kabel eingehängt werden können. Zumindest der etwas dünnere Neutralleiter 4-N kann mechanisch an der Kunststoffabdeckung eingehängt werden.

In einem weiteren Montageschritt wird die zweite Platine 9, wie sie in Fig. 2 dargestellt ist, in das Filterblech 2 eingelegt und beispielsweise mithilfe von vier Schrauben 15 befestigt.

In einem weiteren Montageschritt können zudem Ringpulverkerne 19 angebracht werden. Hierzu werden beispielsweise drei Ringpulverkerne 19 auf die um die ersten Ringkernhalter 3 herumgewickelten Wechselstromkabel 4-L1, 4-L2, 4-L3 aufgeschoben. Der Neutralleiter 4-N wird von keinem Ringpulverkern 19 umschlossen.

In einem weiteren Montageschritt können Ferritringkerne in den zweiten Ringkernhalter 6 eingesetzt bzw. eingelegt werden. In einem weiteren Montageschritt werden die Wechselstromleitungen 4-L1, 4-L2, 4-L3, welche jeweils durch einen Ringpulverkern 19 umschlossen sind, sowie der Neutralleiter 4-N durch die innere zylindrische Öffnung der zweiten Ringkernhalter 6 hindurchgeführt, wie in den Figuren 1, 2 für das erste Stromversorgungskabel 4-L1 dargestellt. Auf diese Weise werden CMCs (Common Mode Choke)gebildet. In einem weiteren Montageschritt können die zweiten Ringkernhalter 6 an dem Montageblech 2 fixiert werden, beispielsweise mithilfe von Schrauben 14, wie in Fig. 1 erkennbar. Der zweite Ringkernhalter 6 liegt somit oberhalb der Komponenten 10 der zweiten Platine 9, wie in den Figuren 1, 2 dargestellt. Bei einer möglichen Ausführungsform können anschließend an den Gewinden 5A der Anschlusskontakte 5 Sternpunktleitungen aufgelegt werden und jeweils mit einer Beilagscheibe und einer Sechskantmutter befestigt werden. Von unten nach oben ist das Außengewinde 5A des Anschlusskontaktes 5 dann mit einer Distanzhülse 13 im Kabelschuh 4A einer Sternpunktleitung, einer Beilagscheibe und einer oben liegenden Sechskantmutter umschlossen. Die Sechskantmutter wird anschließend in einem finalen Montageschritt festgezogen. Auf diese Weise entsteht eine Baugruppe, die als Filtervorrichtung 1 mit weiteren Geräten verbunden werden. Die Montage der in den Figuren 4, 5 dargestellten DC-Filtervorrichtung 1 erfolgt in analoger Weise.

Die fertig montierte Filtervorrichtung 1 kann in umgekehrter Reihenfolge der Montageschritte auch wieder in ihre Einzelbestandteile zerlegt werden. Auf diese Weise ist es möglich, einzelne Baukomponenten einer Filtervorrichtung 1 zu recyceln. Das Filterblech 2 der Filtervorrichtung 1 dient als Träger zur Montage der Baugruppe. Das Filterblech 2 besteht vorzugsweise aus einem wärmeableitenden Material zur Kühlung der Baugruppe. Die erfindungsgemäße Filtervorrichtung 1 kann für verschiedene Anwendungsszenarien konfiguriert bzw. umkonfiguriert werden. Dabei kann die Filtervorrichtung 1 auch für Ströme mit hohen Stromamplitudeneingesetzt werden. Bei der erfindungsgemäßen Filtervorrichtung 1 erlaubt die modulare Bauweise, mehrere Ebenen auszunutzen, sodass die erfindungsgemäße Baugruppe kompakt ist und innerhalb eines Gerätegehäuses wenig Platz einnimmt. Beispielsweise ist der zweite Ringkernhalter 6 oberhalb der mit Komponenten 10 bestückten zweiten Platine 9 angeordnet. Weiterhin verlaufen die Stromkabel auf der Rückseite der ersten Platine 7 oberhalb der Komponenten 8, die auf der Vorderseite der Platine 7 angebracht sind. Die stromführenden Kabel, d.h. die Wechselstromkabel 4-L und die Gleichstromkabel 4-DC sowie der Neutralleiter 4-N, sind flexible Leiter, die direkt auf die ersten Ringkernhalter 3 montiert werden können, welche bereits in das Montageblech bzw. Filterblech 2 eingeschoben sind. Damit kann während der laufenden Montage eine unterschiedliche Wicklung für eine unterschiedliche Anzahl der Wicklungswindungen erfolgen, je nach Anwendungsfall. Auch die Orientierung der Wicklungen kann je nach Anwendungsfall geändert werden.

Die erfindungsgemäße Filtervorrichtung 1 ist nicht auf die in den Figuren 1 bis 6 dargestellten Ausführungsbeispiele beschränkt. Beispielsweise kann die Anzahl der stromführenden Leitungen, insbesondere Wechselstromleitungen, je nach Anwendungsfall variieren.

## Patentansprüche

1. Filtervorrichtung (1) zur Reduzierung elektromagnetischer Störungen mit modularem Montageaufbau,
wobei die Filtervorrichtung (1) ein Filterblech (2) zur Aufnahme von ersten Ringkernhaltern (3) aufweist, die in Führungsschienen des Filterblechs (2) eingeschoben sind und eine erste Anzahl von Ferritringen enthalten, wobei um die ersten Ringkernhalter (3) herum isolierte Wechselstromkabel (4-L) für Wechselstromphasen (L) und ein Neutralleiter (4-N) oder isolierte Gleichstromkabel (4-DC) für Gleichströme (DC) zur Bildung einer stromkompensierten Drossel der Filtervorrichtung (1) mehrfach gewickelt sind, wobei die Wechselstromkabel (4-L) und der Neutralleiter (4-N) oder die Gleichstromkabel (4-DC) einerseits mit Anschlusskontakten (5) der Filtervorrichtung (1) verbunden sind und andererseits durch zweite Ringkernhalter (6), die auf das Filterblech (2) der Filtervorrichtung (1) montiert sind und eine zweite Anzahl von Ferritringen enthalten, hindurchgeführt sind.

2. Filtervorrichtung nach Anspruch 1,
wobei die Anschlusskontakte (5) der Filtervorrichtung (1) an einer Stirnseite des Filterblechs (2) vorgesehen sind und jeweils ein Gewinde (5A) aufweisen, das durch eine entsprechende Öffnung (7A) einer ersten Platine (7) hindurchragt, an dem ein Kabelschuh (4A) eines um die ersten Ringkernhalter (3) herumgewickelten Wechsel- oder Gleichstromkabels (4) befestigt ist.

3. Filtervorrichtung nach Anspruch 2,
wobei die erste Platine (7) mit elektronischen Komponenten (8), insbesondere Kondensatoren und/oder Widerständen, bestückt ist.

4. Filtervorrichtung nach Anspruch 1,
wobei die Kondensatoren (8) auf einer Bestückungsseite der ersten Platine (7) angebracht sind, die dem Filterblech (2) der Filtervorrichtung (1) gegenüberliegt und die Wechsel- und Gleichstromkabel (4) entlang einer Rückseite der ersten Platine (7) zu den durch die Öffnungen (7A) der ersten Platine (7) hindurchragenden Gewinden (5A) der Anschlusskontakte (5) der Filtervorrichtung (1) verlaufen.

5. Filtervorrichtung nach einem der vorangehenden Ansprüche 2 bis 4,
wobei auf der Rückseite der ersten Platine (7) eine Kunststoffabdeckung zur elektrischen Isolierung sowie zur Führung und Befestigung der Wechsel- oder Gleichstromkabel (4) vorgesehen ist.

6. Filtervorrichtung nach einem der vorangehenden Ansprüche, wobei unterhalb der zweiten Ringkernhalter (6) eine zweite Platine (9), welche mit elektronischen Komponenten (10), insbesondere Kondensatoren und/oder Widerständen, bestückt ist, in das Filterblech (2) der Filtervorrichtung (1) eingelegt und befestigt ist.

7. Filtervorrichtung nach einem der vorangehenden Ansprüche 1 bis 6,
wobei die isolierten Wechselstromkabel (4-L) von Ringpulverkernen (19) umschlossen sind, die sich zwischen den ersten Ringkernhaltern (3) und den zweiten Ringkernhaltern (6) befinden.

8. Filtervorrichtung nach einem der vorangehenden Ansprüche, wobei die auf den beiden Platinen (7, 9) der Filtervorrichtung (1) vorgesehenen Kondensatoren (8, 10) X-Kondensatoren zur Dämpfung von Gegentakt-Störspannungen und/oder Y-Kondensatoren zur Unterdrückung von Störspannungen aufweisen.

9. Filtervorrichtung nach einem der vorangehenden Ansprüche 2 bis 8,
wobei das durch die Öffnung (7A) der ersten Platine (7) hindurchragende Gewinde (5A) teilweise von einer Distanzhülse umschlossen wird, auf die der Kabelschuh (4A) eines Wechselstromkabels (4-L) oder Gleichstromkabels (4-DC) aufgesetzt und mittels einer Mutter befestigt ist.

10. Filtervorrichtung nach einem der vorangehenden Ansprüche 1 bis 9,
wobei die Filtervorrichtung (1) ein PV-Generator-seitiges DC-Filter zur Filterung der Gleichstromversorgung eines Gerätes durch einen Photovoltaikgenerator aufweist.

11. Filtervorrichtung nach einem der vorangehenden Ansprüche 1 bis 9,
wobei die Filtervorrichtung (1) ein netzseitiges AC-Filter zur Filterung der Wechselstromversorgung eines Gerätes durch ein Wechselstromnetz aufweist.

12. Filtervorrichtung nach Anspruch 10 oder 11,
wobei das Gerät ein Wechselrichter ist.

13. Filtervorrichtung nach einem der vorangehenden Ansprüche 1 bis 12,
wobei die erste Anzahl von Ferritringen und/oder die zweite Anzahl von Ferritringen konfigurierbar ist.

14. Filtervorrichtung nach einem der vorangehenden Ansprüche 1 bis 13,
wobei die Anzahl von Wicklungen der Wechselstromkabel (4-L) oder Gleichstromkabel (4-DC) um die ersten Ringkernhalter (3) herum konfigurierbar ist.

15. Filtervorrichtung nach einem der vorangehenden Ansprüche, wobei die Ringkernhalter (3, 6) und/oder die Platinen (7, 9) austauschbar an dem Filterblech (2) der Filtervorrichtung (1) montiert sind.

## Claims

1. Filter device (1) for reducing electromagnetic interferences, having a modular mounting construction, wherein the filter device (1) has a filter plate (2) for receiving first annular core holders (3), which are slid into guide rails of the filter plate (2) and contain a first number of ferrite rings, insulated alternating current cables (4-L) for alternating current phases (L) and a neutral conductor (4-N) or insulated direct current cable (4-DC) for direct currents (DC) being wound around the first annular core holders (3) multiple times to form a current-compensated throttle of the filter device (1), the alternating current cable (4-L) and the neutral conductor (4-N) or direct current cable (4-DC) being connected to terminal contacts (5) of the filter device (1) and also being passed through second annular core holders (6), which are mounted on the filter plate (2) of the filter device (1) and contain a second number of ferrite rings.

2. Filter device according to claim 1,
wherein the terminal contacts (5) of the filter device (1) are provided on an end face of the filter plate (2) and each have a thread (5A), which penetrates through a corresponding opening (7A) in a first circuit board (7) and on which a cable shoe (4A) of an alternating or direct current cable (4), wound around the first annular core holders (3), is fixed.

3. Filter device according to claim 2,
wherein the first circuit board (7) is fitted with electronic components (8), in particular capacitors and/or resistors.

4. Filter device according to claim 1,
wherein the capacitors (8) are attached to a component side of the first circuit board (7), which is opposite the filter plate (2) of the filter device (1), and the alternating and direct current cables (4) extend along a rear side of the first circuit board (7) to the threads (5A), penetrating through the openings (7A) in the first circuit board (7), of the terminal contacts (5) of the filter device (1).

5. Filter device according to any of preceding claims 2 to 4, wherein a plastics material cover for electrically insulating and for guiding and fastening the alternating or direct current cables (4) is provided on the rear side of the first circuit board (7).

6. Filter device according to any of the preceding claims, wherein, below the second annular core holders (6), a second circuit board (9) equipped with electronic components (10), in particular capacitors and/or resistors, is laid and fixed in the filter plate (2) of the filter device (1).

7. Filter device according to any of preceding claims 1 to 6, wherein the insulated alternating current cables (4-L) are enclosed by annular powder cores (19) located between the first annular core holders (3) and the second annular core holders (6).

8. Filter device according to any of the preceding claims, wherein the capacitors (8, 10) provided on the two circuit boards (7, 9) of the filter device (1) are X capacitors for attenuating differential mode interference voltages and/or Y capacitors for suppressing interference voltages.

9. Filter device according to any of preceding claims 2 to 8, wherein the thread (5A) penetrating through the opening (7A) in the first circuit board (7) is enclosed in part by a spacer sleeve, on which the cable shoe (4A) of an alternating current cable (4-L) or direct current cable (4-DC) is placed and fixed by means of a nut.

10. Filter device according to any of preceding claims 1 to 9, wherein the filter device (1) has a DC filter on the PV generator side for filtering the direct current supply to an appliance from a photovoltaic generator.

11. Filter device according to any of preceding claims 1 to 9, wherein the filter device (1) is a grid-side AC filter for filtering the alternating current supply to an appliance from an alternating current grid.

12. Filter device according to either claim 10 or claim 11,
wherein the appliance is an inverter.

13. Filter device according to any of preceding claims 1 to 12, wherein the first number of ferrite rings and/or the second number of ferrite rings are configurable.

14. Filter device according to any of preceding claims 1 to 13, wherein the number of windings of the alternating current cable (4-L) or direct current cable (4-DC) around the first annular core holders (3) is configurable.

15. Filter device according to any of the preceding claims, wherein the annular core holders (3, 6) and/or the circuit boards (7, 9) are mounted replaceably on the filter plate (2) of the filter device (1).

## Revendications

1. Dispositif de filtrage (1) pour la réduction des perturbations électromagnétiques, doté d'une structure de montage modulaire,
le dispositif de filtrage (1) présentant une tôle de filtre (2) destinée à recevoir des premiers supports de noyaux toroïdaux (3) qui sont insérés dans des rails de guidage de la tôle de filtre (2) et qui comprennent un premier nombre d'anneaux de ferrite, des câbles de courant alternatif isolés (4-L) pour des phases de courant alternatif (L) et un conducteur neutre (4-N) ou des câbles de courant continu isolés (4-DC) pour des courants continus (DC) étant enroulés plusieurs fois autour des premiers supports de noyaux toroïdaux (3) pour former une bobine d'arrêt à compensation de courant du dispositif de filtrage (1), les câbles de courant alternatif (4-L) et le conducteur neutre (4-N) ou les câbles de courant continu (4-DC) étant, d'une part, reliés à des contacts de connexion (5) du dispositif de filtrage (1) et, d'autre part, passés à travers de deuxièmes supports de noyaux toroïdaux (6) qui sont montés sur la tôle de filtre (2) du dispositif de filtrage (1) et qui comprennent un deuxième nombre d'anneaux de ferrite.

2. Dispositif de filtrage selon la revendication 1,
dans lequel les contacts de connexion (5) du dispositif de filtrage (1) sont prévus sur une face frontale de la tôle de filtre (2) et présentent chacun un filetage (5A) qui fait saillie à travers une ouverture correspondante (7A) d'une première platine (7), auquel est fixée une cosse (4A) d'un câble de courant alternatif ou continu (4) enroulé autour des premiers supports de noyaux toroïdaux (3).

3. Dispositif de filtrage selon la revendication 2,
dans lequel la première plaquette (7) est équipée de composants électroniques (8), en particulier de condensateurs et/ou de résistances.

4. Dispositif de filtrage selon la revendication 1,
dans lequel les condensateurs (8) sont rapportés sur une face d'équipement de la première platine (7) qui est opposée à la tôle de filtre (2) du dispositif de filtrage (1) et les câbles de courant alternatif et continu (4) s'étendent le long d'une face arrière de la première platine (7) jusqu'aux filetages (5A) des contacts de connexion (5) du dispositif de filtrage (1) qui font saillie à travers les ouvertures (7A) de la première platine (7).

5. Dispositif de filtrage selon l'une des revendications 2 à 4 précédentes,
dans lequel un couvercle en matière plastique est prévu sur la face arrière de la première platine (7) pour l'isolation électrique ainsi que pour le guidage et la fixation des câbles de courant alternatif ou continu (4).

6. Dispositif de filtrage selon l'une des revendications précédentes,
dans lequel une deuxième platine (9), qui est équipée de composants électroniques (10), en particulier de condensateurs et/ou de résistances, est posée et fixée dans la tôle de filtre (2) du dispositif de filtrage (1), en dessous des deuxièmes supports de noyaux toroïdaux (6).

7. Dispositif de filtrage selon l'une des revendications 1 à 6 précédentes,
dans lequel les câbles de courant alternatif isolés (4-L) sont entourés par des noyaux de poudre toroïdaux (19) qui sont situés entre les premiers supports de noyaux toroïdaux (3) et les deuxièmes supports de noyaux toroïdaux (6).

8. Dispositif de filtrage selon l'une des revendications précédentes,
dans lequel les condensateurs (8, 10) prévus sur les deux platines (7, 9) du dispositif de filtrage (1) présentent des condensateurs X pour atténuer les tensions parasites en mode différentiel et/ou des condensateurs Y pour supprimer les tensions parasites.

9. Dispositif de filtrage selon l'une des revendications 2 à 8 précédentes,
dans lequel le filetage (5A) qui fait saillie à travers l'ouverture (7A) de la première platine (7) est partiellement entouré par une douille d'écartement sur laquelle la cosse (4A) d'un câble de courant alternatif (4-L) ou d'un câble de courant continu (4-DC) est posée et fixée au moyen d'un écrou.

10. Dispositif de filtrage selon l'une des revendications 1 à 9 précédentes,
dans lequel le dispositif de filtrage (1) présente un filtre DC côté générateur PV pour filtrer l'alimentation en courant continu d'un appareil par un générateur photovoltaïque.

11. Dispositif de filtrage selon l'une des revendications 1 à 9 précédentes,
dans lequel le dispositif de filtrage (1) présente un filtre AC côté réseau pour filtrer l'alimentation en courant alternatif d'un appareil par un réseau de courant alternatif.

12. Dispositif de filtrage selon la revendication 10 ou 11, dans lequel l'appareil est un onduleur.

13. Dispositif de filtrage selon l'une des revendications 1 à 12 précédentes,
dans lequel le premier nombre d'anneaux de ferrite et/ou le deuxième nombre d'anneaux de ferrite sont configurables.

14. Dispositif de filtrage selon l'une des revendications 1 à 13 précédentes,
dans lequel le nombre d'enroulements des câbles de courant alternatif (4-L) ou des câbles de courant continu (4-DC) autour des premiers supports de noyaux toroïdaux (3) est configurable.

15. Dispositif de filtrage selon l'une des revendications précédentes,
dans lequel les supports de noyaux toroïdaux (3, 6) et/ou les platines (7, 9) sont montés de manière interchangeable sur la tôle de filtre (2) du dispositif de filtrage (1).
